# EUROPEAN PATENT APPLICATION

(11) **EP 2 390 632 A1**
(43) Date of publication of application: **30.11.2011**
(21) Application number: 10164165.2
(22) Date of filing: 27.05.2010
(51) Int. Cl.: G01F 1/32

(54) **Flowmeter**

(71) Applicant: Aquametro AG, 4106 Therwil (CH)
(72) Inventor: Vincent, Michael Grange, 4106, Therwil (CH); Schulz, Wolfgang, 4411, Seltisberg (CH); Bhattacharjya, Kin, 700031, Kolkata (IN); Kappertz, Fred, 4146, Hochwald (CH)
(74) Representative: Braun, André jr.

(57) **Abstract**

A fluid flow is measured using a fluidic oscillator. For detecting its oscillation frequency the acoustical noise generated by the oscillating fluid jet in the oscillator is detected by means of acoustical sensors.

## Description

The invention is related with a method of detecting fluid flow using a fluidic oscillator and detecting its oscillation frequency and deriving the fluid flow rate therefrom. The invention is further related with a flow meter comprising a fluidic oscillator with an inlet nozzle, a switching region and an outlet channel.

For the purpose of the present specification the term "switching region" is used to define the area of a fluidic oscillator in which the fluid jet switches in an oscillating manner between two paths extending along so-called attachment walls. Depending on the type of oscillator the two paths may or may not be separated by a so-called splitter.

The principle of fluidic oscillation for detecting fluid flow rates is well known in the art. Fluid flow measurement based on fluidic oscillation is described e.g. in US Patent 3,690,171. The frequency of oscillation of a fluid jet between two outlet channels being proportional to the flow rate through the oscillator is used to determine the flow rate. The oscillation frequency is detected by means of a differential pressure sensor housed in a connection extending through the splitter between the outlet channels.

Instead of using differential pressure detection for determining the oscillation frequency it has also been proposed to use optical sensors, ultrasound transducers etc. Each of the known detection methods has certain disadvantages, be it a relatively high consumption of electrical energy, the problem of deterioration of the sensors in contact with the fluid flow or their relatively high cost.

It is the aim of the present invention to provide a method and a device for fluid flow measurement based on fluidic oscillation without the disadvantages of the prior art systems.

According to the invention this is achieved by detecting the acoustical noise generated by the oscillating fluid jet in the oscillator. A flow meter according to this invention has at least one acoustical sensor positioned in the vicinity of the switching region.

For the purpose of the present specification the term "acoustical sensor" is used for transducers sensing vibrations or pressure waves in the infra and audible ranges, known as structure borne noise when transmitted through solid material or as sound when transmitted through the air.

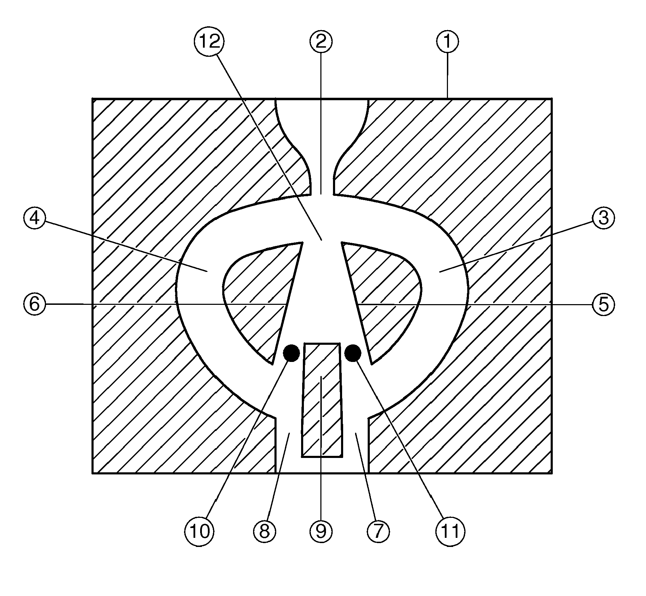

In the following a preferred embodiment of the invention is described with reference to the accompanying drawing. The drawing shows a schematic representation of a cross-section through a typical type of a fluidic oscillator.

As shown in the drawing a fluidic oscillator 1 has an inlet nozzle 2, a switching region 12, feedback channels 3,4, attachment walls 5,6, outlet channels 7,8 and a splitter 9. A fluid flow issues as a jet from the inlet nozzle 2. This jet attaches to a first attachment wall 5 of the interaction region due to the Coanda effect. Backflow through the internal feedback channel 3 adjacent to the first wall 5 causes the jet to detach from wall 5 and attach to the opposite wall 6. The process repeats itself, producing a self-sustaining oscillation, the frequency of which is directly related to the flow rate. The splitter 9 speeds the transition between the two attachment walls.

Acoustic sensors 10,11 are attached to the outer surface of the fluidic oscillator in symmetrically related positions above or below the output channels 7,8 between the attachment walls and splitter, where they detect the structure-borne noise produced by the oscillating jet and distributed in the whole body of the oscillator. The position upstream of the outlet channels produce some of the strongest signals compared to other locations for this type of fluidic oscillator. As an alternative the sensors may be positioned above or below the feedback channels 3,4. For other designs of fluidic oscillators other suitable positions for the acoustic sensors may easily be determined. Preferably, the sensors are mounted in positions where they are not in contact with the fluid. This could also be in holes in the body of the oscillator. The acoustic signals are easily transmitted through the fluidic oscillator body to reach the sensors. The advantage of this "non-intrusive" mounting of the sensors is that they are independent of the type of fluid and in case of a defect they may be exchanged without dismounting the device from the pipe work

Changes in the acoustic signals represent changes in the oscillation frequency. Differential measurements are made with the acoustic sensors. Due to their symmetrical position with regard to the two positions of the oscillating jet the signals are 180° out of phase. By subtracting one signal from the other, the resultant signal is doubled in amplitude. Moreover, unwanted common mode signals are cancelled.

Associated with the sensing technique there are electronic processing circuits which amplify and condition the acoustic signal or signals to create a signal whose frequency corresponds to the frequency of oscillation of the fluidic oscillator. This signal is then fed into signal processing circuitry whose function is to convert the frequency into flow rate and/or totalised flow. The methods of signal conditioning and processing are well-known in the art.

Instead of two sensors for differential measurement it is also possible to operate with only one sensor. The sensors are cheap and the electronics for processing and conditioning the signals are simple. Power requirements are low, in particular for self-powering sensors such as piezo-electric type sensors, making battery operation viable.

As an example, it has been found that MEMS surface mount microphones commonly used in mobile telephones can detect oscillations down to a few Hertz. However the invention applies to any type of acoustic sensor and is not limited to microphones.

The invention is not limited to the fluidic oscillator described as a preferred embodiment but may be used with anyone of the various types of fluidic oscillators.

## Claims

1. A method of detecting fluid flow using a fluidic oscillator and detecting its oscillation frequency and deriving the fluid flow rate therefrom, **characterized by** detecting the acoustical noise generated by the oscillating fluid jet in the oscillator.

2. A flow meter comprising a fluidic oscillator (1) with an inlet nozzle (2), a switching region (12) and an outlet channel (7,8) **characterized by** at least one acoustical sensor (10) positioned in the vicinity of the switching region.

3. A flow meter according to claim 2, **characterized in that** the sensor is positioned on the outer surface of the oscillator.

4. A flow meter according to claim 2, **characterized in that** the outlet channel comprises two channels (7,8) divided by a splitter.

5. A flow meter according to claim 4, **characterized in that** two sensors (10,11) are arranged in symmetrically related positions above or below the output channels (7,8) between the attachment walls and splitter.

6. A flow meter according to claim 2, **characterized in that** the oscillator comprises feedback channels (3,4) and that two sensors (10,11) are arranged in symmetrically related positions above or below the feedback channels (3,4).
